# FASCICULE DE BREVET EUROPEEN

(11) **EP 0 597 765 B1**
(45) Date de publication et mention de la délivrance du brevet: **10.04.1996**
(21) Numéro de dépôt: 93402731.9
(22) Date de dépôt: 08.11.1993
(51) Int. Cl.: H02G 3/20, F21V 21/02

(54) **Boîte d'encastrement pour suspension d'un lustre à un plafond**
Einbaudose zur Leuchteaufhängung an einer Decke
Flush mounted box for suspending a lighting device to a ceiling

(30) Priorité: 10.11.1992 FR 9213531
(43) Date de publication de la demande: 18.05.1994
(73) Titulaire: LEGRAND, F-87045 Limoges Cédex (FR)
(72) Inventeur: Da Rocha, Jacques, F-87350 Panazol (FR); Lebrun, Guy, F-87280 Limoges (FR)
(74) Mandataire: CABINET BONNET-THIRION

(56) Documents cités:
- DE-U- 9 205 309
- US-A- 1 548 491
- US-A- 2 671 821

## Description

La présente invention concerne d'une manière générale la suspension d'un lustre à un plafond.

Ainsi qu'on le sait, cette suspension se fait usuellement à l'aide d'un piton.

Eu égard à la charge à supporter, qui est souvent supérieure à 15 kg, il importe, évidemment, que soit assuré un transfert de cette charge à une structure de support apte à l'encaisser.

C'est le cas, très simplement, dans les plafonds massifs du type de ceux constitués de dalles préfabriquées.

Il a été proposé, pour de tels plafonds, des boîtes d'encastrement, dont un point central forme un point d'ancrage pour le piton à mettre en oeuvre, et qui, noyées par avance dans la dalle concernée, lors même de la fabrication de celle-ci, permettent un transfert à cette dalle de la charge du piton, soit que ce transfert se fasse par leur propre intermédiaire, soit qu'il se fasse par l'intermédiaire d'un accessoire, en forme de barrette, qui est noyé dans la dalle au dos de leur fond, et auquel est directement attelé le piton.

Ces boîtes d'encastrement ont pour avantage d'assurer la protection des organes de connexion mis en oeuvre pour le raccordement du lustre aux conducteurs devant assurer sa desserte.

Mais, à ce jour, ces boîtes d'encastrement ne trouvent pas leur application dans le cas de plafonds réalisés en cloisons communément dites sèches, c'est-à-dire de plafonds, ou plus exactement de faux plafonds, qui, réalisés à l'aide de panneaux de relativement faible épaisseur et de relativement faible résistance mécanique, sont suspendus à une structure porteuse par l'intermédiaire d'une ossature appropriée.

Il est nécessaire en effet dans ce cas que la charge du piton à mettre en oeuvre soit transmise à cette structure porteuse, et, à ce jour, ce transfert est assuré par le piton lui-même, ce piton étant suffisamment prolongé à cet effet.

De même, les boîtes d'encastrement connues à ce jour ne trouvent pas non plus actuellement leur application dans le cas de plafonds traditionnels, c'est-à-dire dans le cas de plafonds à hourdis.

La présente invention a d'une manière générale pour objet une boîte d'encastrement convenant au contraire tout particulièrement dans de tels cas.

Cette boîte d'encastrement, qui est donc destinée à la suspension d'un lustre à un plafond, est du genre équipée par avance, comme les boites d'encastrement pour plafond massif, d'un organe d'ancrage comportant un logement taraudé pour le vissage du piton nécessaire, et elle est d'une manière générale caractérisée en ce que cet organe d'ancrage comporte, d'un seul tenant, à son dos, un deuxième logement taraudé, pour le vissage d'un tirant.

Dans le cas, par exemple, d'un plafond en cloison sèche, ce tirant permet avantageusement le transfert de la charge du piton à la structure porteuse sus-jacente.

Dans le cas d'un plafond traditionnel à hourdis, il permet, de manière semblable, si désiré, et par mesure de sécurité, en sus du scellement de la boîte d'encastrement dans un tel hourdis, un report de la charge du piton à la surface supérieure de ce hourdis.

Dans tous les cas, la charge du piton transite de ce piton à ce tirant par l'intermédiaire de l'organe d'ancrage mis en oeuvre suivant l'invention, et, en pratique, cet organe d'ancrage constitue pour ce faire une pièce de force réalisée en un matériau particulièrement résistant, tel que métal, alliage métallique ou matériau composite par exemple.

Préférentiellement, l'organe d'ancrage dont est équipée la boîte d'encastrement suivant l'invention s'étend au moins pour partie dans une cheminée isolante, au bénéfice de la sécurité.

Par exemple, la boîte d'encastrement étant réalisée en matière synthétique, et donc isolante, cette cheminée est d'un seul tenant avec son fond.

Quoi qu'il en soit, l'organe d'ancrage, qui est par exemple une pièce métallique, et qui est en liaison électrique avec le tirant, également métallique, associé et avec le piton de suspension correspondant, est ainsi avantageusement isolé des conducteurs électriques desservant la boîte d'encastrement.

Certes, il est décrit, dans les brevets américains Nos 1 548 491 et 2 671 821, des boîtes d'encastrement dans lesquelles intervient un organe d'ancrage pour permettre d'y atteler un piton.

Mais dans le brevet américain No 1 548 491, la boîte d'encastrement est noyée dans la dalle qu'elle équipe, ce qui permet, suivant des dispositions évoquées ci-dessus, de transférer à cette dalle la charge à laquelle est soumis le piton qui est attelé à cette boîte d'encastrement.

En pratique, l'organe d'ancrage avec lequel est en prise ce piton n'équipe pas, à proprement parler, la boîte d'encastrement, puisqu'il n'est pas disposé par avance dans celle-ci.

Il s'agit en effet d'un organe d'ancrage à rapporter sur la boîte d'encastrement, par vissage sur un plot fileté prévu axialement en saillie à cet effet sur le fond de cette boîte d'encastrement.

De ce fait, la boîte d'encastrement est quasi sûrement métallique.

De même, si le brevet américain No 2 671 821 concerne bien une boîte d'encastrement pour faux plafond permettant de transférer à la structure porteuse de celui-ci la charge du piton, cette boîte d'encastrement n'est pas équipée par avance de l'organe d'ancrage auquel doit être attelé le piton, puisque cet organe d'ancrage sert à sa propre fixation à une bride prévue à cet effet sur la structure porteuse, et qu'il doit donc être manipulé indépendamment de tout piton lors de la fixation de la boîte d'encastrement sur cette bride.

En outre, l'organe d'ancrage en question ne comporte pas de "logement taraudé", à la différence de celui équipant la boîte d'encastrement objet de la présente demande de brevet, mais, suivant une disposition inverse, des embouts filetés.

Enfin, dans l'un et l'autre cas, l'organe d'ancrage n'est pas disposé dans une cheminée isolante.

Il en est d'autant plus ainsi, s'agissant du brevet américain No 1 548 491, qu'étant par lui-même en matière isolante, cet organe d'ancrage n'a pas besoin d'être isolé.

Il n'en est pas de même avec l'organe d'ancrage de la boîte d'encastrement suivant l'invention.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une boîte d'encastrement suivant l'invention, vue de dessous ;
la figure 2 en est une vue en perspective vue de dessus ;
la figure 3 est, à échelle supérieure, une vue partielle en coupe axiale de cette boîte d'encastrement, suivant la ligne III-III de la figure 2 ;
la figure 4 en est, à échelle encore supérieure, une vue partielle en coupe transversale, suivant la ligne IV-IV de la figure 3 ;
la figure 5 est, à échelle réduite, une vue en coupe axiale illustrant la mise en oeuvre de la boîte d'encastrement suivant l'invention ;
la figure 6 est une vue en perspective qui, analogue à celle de la figure 1, se rapporte à une variante de réalisation.

Tel qu'illustré sur ces figures, et de manière connue en soi, la boîte d'encastrement 10 suivant l'invention comporte, globalement, en forme de cloche, un fond 11 et une paroi latérale 12.

Elle est réalisée d'un seul tenant, en matière synthétique, et donc isolante.

Dans les formes de réalisation représentées, sa paroi latérale 12 est cylindrique et a transversalement un contour circulaire.

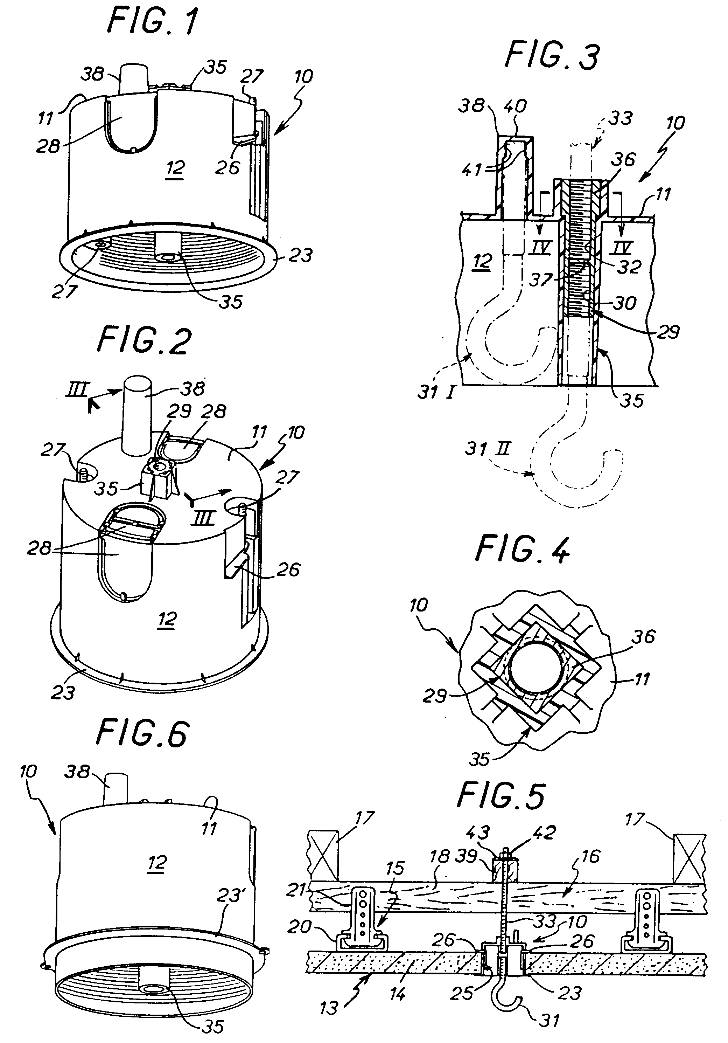

Dans la forme de réalisation plus particulièrement représentée sur les figures 1 à 5, cette boîte d'encastrement 10 est destinée à l'équipement de plafonds 13 comportant une cloison sèche 14 suspendue par une ossature 15 à une structure porteuse 16.

Par exemple, et tel que représenté, la structure porteuse 16 est formée d'un réseau quadrillé de solives 17 et de chevrons 18, et l'ossature 15 est formée d'un réseau parallèle de profilés 20, qui sont encliquetés sur des suspentes 21 fixées aux chevrons 18, et sur lesquels est rapportée, en pratique par vissage, la cloison sèche 14.

La paroi latérale 12 de la boîte d'encastrement 10 suivant l'invention comporte alors à sa base, à ras avec son bord libre, une collerette 23 par laquelle elle est destinée à s'appliquer contre la cloison sèche 14, d'un premier côté de celle-ci, autour du débouché du perçage 25 prévu pour son encastrement dans cette cloison sèche 14.

Conjointement, la boîte d'encastrement 10 suivant l'invention comporte, également, dans ce cas, des moyens d'appui destinés à porter sur la cloison sèche 14 du côté de celle-ci opposé à la collerette 23.

Dans la forme de réalisation représentée, ces moyens d'appui sont constitués de pattes 26, qui, d'une part, sont susceptibles de passer d'une position escamotée, représentée sur les figures 1 et 2, pour laquelle elles se tiennent dans le contour hors tout de la paroi latérale 12, à une position déployée, représentée sur la figure 5, pour laquelle elles font au contraire saillie radialement vers l'extérieur sur cette paroi latérale 12, et qui, d'autre part, sont mobiles suivant une génératrice de la paroi latérale 12 sous le contrôle de vis 27 accessibles du débouché de celle-ci.

Les dispositions correspondantes étant bien connues par elles-mêmes, et ne relevant pas de la présente invention, elles ne seront pas décrites plus en détail ici.

De manière également connue en soi, il est prévu, dans le fond 11, et/ou dans la paroi latérale 12, des opercules défonçables 28 propres à y dégager des ouvertures, pour le passage des conducteurs électriques nécessaires à la desserte du lustre concerné.

De manière connue en soi, enfin, la boîte d'encastrement 10 suivant l'invention est équipée par avance d'un organe d'ancrage 29 qui, à la manière d'un écrou, comporte un logement taraudé 30 pour le vissage du piton 31 nécessaire à la suspension d'un tel lustre.

Suivant l'invention, cet organe d'ancrage 29 comporte, d'un seul tenant, à son dos, un deuxième logement taraudé 32, pour le vissage d'un tirant 33 dont l'extrémité correspondante, au moins, est filetée.

Préférentiellement, et tel que représenté, ce tirant 33 est fileté sur toute sa hauteur.

En pratique, dans les formes de réalisation représentées, les deux logements taraudés 30, 32 de l'organe d'ancrage 29 sont dans l'alignement l'un de l'autre, en étant orientés en sens opposés l'un par rapport à l'autre.

Le logement taraudé 30 débouche à l'extérieur dans le volume interne de la boîte d'encastrement 10, par exemple à mi-hauteur de celle-ci.

Au contraire, le logement taraudé 32 débouche à l'extérieur hors du volume interne de la boîte d'encastrement 10, par exemple en surélévation par rapport à la surface extérieure de son fond 11.

L'organe d'ancrage 29 traverse donc ce fond 11.

En pratique, cet organe ancrage 29 constitue une pièce de force réalisée en un matériau particulièrement résistant, tel que métal, alliage métallique ou matériau composite par exemple.

Préférentiellement, et tel que représenté, cet organe d'ancrage 29 s'étend au moins pour partie dans une cheminée 35 en matière isolante.

Dans les formes de réalisation représentées, cette cheminée 35 est d'un seul tenant avec le fond 11 de la boîte d'encastrement 10.

En outre, dans ces formes de réalisation, l'organe d'ancrage 29 s'étend dans sa totalité dans une telle cheminée 35, suivant l'axe de la boîte d'encastrement 10, au moins dans le volume interne de celle-ci.

Du côté du logement taraudé 30, c'est-à-dire dans le volume interne de la boîte d'encastrement 10, la cheminée 35 s'étend au-delà de l'organe d'ancrage 29, jusqu'à venir à niveau avec le bord libre de la paroi latérale 12.

Du côté du logement taraudé 32, c'est-à-dire à l'extérieur de la boîte d'encastrement 10, la cheminée 35 s'étend à ras avec l'organe d'ancrage 29.

Elle fait donc saillie sur la surface extérieure du fond 11 de la boîte d'encastrement 10.

En pratique, la partie 36 correspondante, ou tête, de l'organe d'ancrage 29 a en section transversale un contour extérieur polygonal, et par exemple carré, tel que représenté, et, autour d'elle, cette cheminée 35 a elle-même un contour polygonal complémentaire, en l'enveloppant au plus près.

L'organe d'ancrage 29 est ainsi bloqué en rotation dans la cheminée 35.

Par exemple, et c'est le cas dans la forme de réalisation plus particulièrement représentée sur les figures 1 à 5, l'organe d'ancrage 29 est en pratique surmoulé à la manière d'un insert dans la cheminée 35.

Mais, en variante, et cela peut être le cas dans la forme de réalisation de la figure 6, il peut tout aussi bien être engagé de l'extérieur dans cette cheminée 35 par sa partie 36 de contour extérieur polygonal.

Dans un tel cas, le bord correspondant de cette cheminée 35 est au moins localement rabattu sur lui par sertissage pour sa retenue axiale.

Abstraction faite de sa partie 36 de contour extérieur polygonal, l'organe d'ancrage 29 a sur le reste de sa hauteur une section transversale de contour circulaire.

Il se présente globalement sous la forme d'une douille.

Dans les formes de réalisation représentées, les deux logements taraudés 30, 32 qu'il comporte sont borgnes, ces deux logements taraudés 30, 32 étant séparés l'un de l'autre par une cloison transversale 37.

En variante, ces deux logements taraudés 30, 32 pourraient au contraire tout aussi bien être en continuité l'un avec l'autre.

En effet, pour correspondre à des sens de vissage identiques, leurs filets respectifs s'étendent dans le même sens.

Ils pourraient donc eux aussi être en continuité l'un avec l'autre.

Dans les formes de réalisation représentées, la boîte d'encastrement 10 suivant l'invention présente, en outre, pour mise en attente d'un piton 31, tel que schématisé en traits interrompus en 31-I à la figure 3, une deuxième cheminée 38, qui, disposée en position excentrée par rapport à la cheminée 35, à distance de celle-ci, s'étend au moins pour partie en saillie sur la surface extérieure du fond 11.

Il s'agit en pratique d'une cheminée borgne.

Dans les formes de réalisation représentées, cette cheminée 38 s'étend en totalité en saillie sur la surface extérieure du fond 11, son débouché à l'extérieur se faisant à ras avec la surface intérieure de celui-ci, dans le volume interne de la boîte d'encastrement 10.

Elle présente, intérieurement, en saillie sur sa paroi latérale, au voisinage immédiat de son fond 40, des nervures 41 dans lesquelles mord le piton 31 lorsqu'il y est implanté.

Après mise en place de la boîte d'encastrement 10 suivant l'invention dans la cloison sèche 14 à équiper, suivant les modalités évoquées précédemment, il est procédé au vissage d'un tirant 33 dans le logement taraudé 32 de l'organe d'ancrage 29 de cette boîte d'encastrement 10, au dos de celle-ci, en intervenant pour ce faire du côté de la structure porteuse 16, et il est procédé ensuite à l'arrimage de ce tirant 33 dans cette structure porteuse 16.

Par exemple, et tel que représenté sur la figure 5, le tirant 33 traverse pour ce faire un tasseau 39 prenant appui sur deux chevrons 18 de la structure porteuse 16, et, au-delà de celui-ci, il est contrebuté par un écrou 42, avec interposition d'un organe d'application 43, tel que barrette ou rondelle par exemple.

Un montage mettant ainsi en oeuvre un tasseau 39 donne avantageusement une plus grande liberté pour l'implantation de la boîte d'encastrement 10.

Le piton 31 est alors transféré de la cheminée 38 à la cheminée 35, en étant vissé dans le logement taraudé 30 de l'organe d'ancrage 29, tel que schématisé en traits interrompus 31-II à la figure 3, et tel que représenté en trait plein à la figure 5.

La charge du lustre ultérieurement suspendu à ce piton 31 est dès lors transférée à la structure porteuse 16 par l'organe d'ancrage 29 et le tirant 33.

La forme de réalisation représentée à la figure 6 est plus particulièrement destinée aux plafonds à hourdis.

Au lieu de la collerette 23, la paroi latérale 12 de la boite d'encastrement 10 suivant l'invention présente alors annulairement, en saillie, à distance de son bord libre, une lèvre 23', pour son scellement dans un logement excavé à cet effet dans un tel hourdis.

Mais, préférentiellement, et suivant l'invention, il est mis en oeuvre, comme précédemment, par mesure de sécurité, en sus d'un tel scellement, un tirant 33.

La présente invention ne se limite d'ailleurs pas aux formes de réalisation décrites et représentées, mais englobe toute variante d'exécution et/ou de combinaison de leurs divers éléments dans les limites définies par les revendications.

## Revendications

1. Boîte d'encastrement pour suspension d'un lustre à un plafond, du genre équipée par avance d'un organe d'ancrage (29) comportant un logement taraudé (30) pour le vissage du piton (31) nécessaire à une telle suspension, caractérisée en ce que ledit organe d'ancrage (29) comporte, d'un seul tenant, à son dos, un deuxième logement taraudé (32), pour vissage d'un tirant (33).

2. Boîte d'encastrement suivant la revendication 1, caractérisée en ce que les deux logements taraudés (30, 32) de l'organe d'ancrage (29) dont elle est équipée sont dans l'alignement l'un de l'autre, en étant orientés en sens opposés l'un par rapport à l'autre.

3. Boîte d'encastrement suivant l'une quelconque des revendications 1, 2, caractérisée en ce que le deuxième logement taraudé (32) de l'organe d'ancrage (29) dont elle est équipée débouche à l'extérieur hors de son volume interne.

4. Boîte d'encastrement suivant l'une quelconque des revendications 1 à 3, caractérisée en ce que l'organe d'ancrage (29) dont elle est équipée constitue une pièce de force réalisée en un matériau particulièrement résistant, tel que métal, alliage métallique ou matériau composite par exemple.

5. Boîte d'encastrement suivant l'une quelconque des revendications 1 à 4, caractérisée en ce que l'organe d'ancrage (29) dont elle est équipée s'étend au moins pour partie dans une cheminée (35) en matière isolante.

6. Boîte d'encastrement suivant la revendication 5, caractérisée en ce que, au moins dans son volume interne, l'organe d'ancrage (29) dont elle est équipée s'étend dans sa totalité dans une cheminée (35).

7. Boîte d'encastrement suivant la revendication 5, caractérisée en ce que, dans son volume interne, la cheminée (35) s'étend au-delà de l'organe d'ancrage (29).

8. Boîte d'encastrement suivant l'une quelconque des revendications 6, 7, caractérisée en ce que la cheminée (35) s'étend à niveau avec le bord libre de sa paroi latérale (12).

9. Boîte d'encastrement suivant l'une quelconque des revendications 5 à 8, caractérisée en ce que la cheminée (35) fait saillie sur la surface extérieure de son fond (11).

10. Boîte d'encastrement suivant l'une quelconque des revendications 5 à 9, caractérisée en ce que, étant elle-même réalisée en matière synthétique isolante, la cheminée (35) est d'un seul tenant avec son fond (11).

11. Boîte d'encastrement suivant l'une quelconque des revendications 5 à 10, caractérisée en ce que l'organe d'ancrage (29) dont elle est équipée est surmoulé dans sa cheminée (35) à la manière d'un insert.

12. Boîte d'encastrement suivant l'une quelconque des revendications 5 à 11, caractérisée en ce que l'organe d'ancrage (29) est bloqué en rotation dans la cheminée (35).

13. Boîte d'encastrement suivant l'une quelconque des revendications 1 à 12, caractérisée en ce que, à distance de l'organe d'ancrage (29) dont elle est équipée, elle présente une cheminée (38) pour mise en attente d'un piton (31).

14. Boîte d'encastrement suivant la revendication 13, caractérisée en ce que ladite cheminée (38) s'étend au moins pour partie en saillie sur la surface extérieure de son fond (11).

## Claims

1. A fixing housing for the suspension of a chandelier from a ceiling, of the kind which is provided beforehand with an anchoring member (29) comprising a screwthreaded housing (30) for screwing in the eye bolt (31) required for such a suspension, characterised in that said anchoring member (29) comprises in one piece at its back a second screwthreaded housing (32) for screwing in a tie member (33).

2. A fixing housing according to claim 1 characterised in that the two screwthreaded housings (30, 32) of the anchoring member (29) with which it is fitted are in alignment with each other, being oriented in opposite directions with respect to each other.

3. A fixing housing according to either one of claims 1 and 2 characterised in that the second screwthreaded housing (32) of the anchoring member (29) with which it is fitted opens to the exterior outside of its internal volume.

4. A fixing housing according to any one of claims 1 to 3 characterised in that the anchoring member (29) with which it is fitted constitutes a load-bearing portion made of a particularly strong material such as for example metal, metal alloy or composite material.

5. A fixing housing according to any one of claims 1 to 4 characterised in that the anchoring member (29) with which it is fitted extends at least in respect of part in a sleeve portion (35) of insulating material.

6. A fixing housing according to claim 5 characterised in that at least in its internal volume the anchoring member (29) with which it is fitted extends in its entirety in a sleeve portion (35).

7. A fixing housing according to claim 5 characterised in that in its internal volume the sleeve portion (35) extends beyond the anchoring member (29).

8. A fixing housing according to either one of claims 6 and 7 characterised in that the sleeve portion (35) extends level with the free edge of the side wall (12) thereof.

9. A fixing housing according to any one of claims 5 to 8 characterised in that the sleeve portion (35) projects on the outside surface of its end portion (11).

10. A fixing housing according to any one of claims 5 to 9 characterised in that, itself being made of insulating synthetic material, the sleeve portion (35) is in one piece with its end portion (11).

11. A fixing housing according to any one of claims 5 to 10 characterised in that the anchoring member (29) with which it is fitted is over-moulded into its sleeve portion (35) in the manner of an insert.

12. A fixing housing according to any one of claims 5 to 11 characterised in that the anchoring member (29) is locked in respect of rotary movement in the sleeve portion (35).

13. A fixing housing according to any one of claims 1 to 12 characterised in that, at a spacing from the anchoring member (29) with which it is fitted, it has a sleeve portion (38) for receiving an eye bolt (31) in readiness.

14. A fixing housing according to claim 13 characterised in that said sleeve portion (38) extends at least in respect of part in projecting relationship on the outside surface of its end portion (11).

## Patentansprüche

1. Einbaudose zur Aufhängung einer Leuchte an einer Decke, die von vorneherein mit einem Verankerungsorgan (29) ausgerüstet ist, das eine innengewindete Aufnahme (30) zum Einschrauben des für eine solche Aufhängung erforderlichen Hakens (31) aufweist, dadurch gekennzeichnet, daß dieses Verankerungsorgan (29) in einem Stück an seinem Rücken eine zweite innengewindete Aufnahme (32) zum Einschrauben eines Ankers (33) aufweist.

2. Einbaudose nach Anspruch 1, dadurch gekennzeichnet, daß die beiden innengewindeten Aufnahmen (30, 32) des Verankerungsorgans (29), mit denen sie ausgerüstet ist, in der gegenseitigen Flucht liegen, indem sie in bezug aufeinander entgegengesetzt gerichtet sind.

3. Einbaudose nach einem der Ansprüche 1, 2, dadurch gekennzeichnet, daß die zweite innengewindete Aufnahme (32) des Verankerungsorgans (29), mit dem sie ausgerüstet ist, außerhalb ihres Innenvolumens nach außen mündet.

4. Einbaudose nach einem der Ansprüche 1 bis 3, dadurch gekennzeichnet, daß das Verankerungsorgan (29), mit dem sie ausgerüstet ist, ein Kraftteil bildet, das aus einem besonders widerstandsfähigen Werkstoff wie beispielsweise Metall, Metallegierung oder Verbundwerkstoff besteht.

5. Einbaudose nach einem der Ansprüche 1 bis 4, dadurch gekennzeichnet, daß das Verankerungsorgan (29), mit dem sie ausgerüstet ist, sich mindestens zum Teil in einem Schacht (35) aus isolierendem Werkstoff erstreckt.

6. Einbaudose nach Anspruch 5, dadurch gekennzeichnet, daß das Verankerungsorgan (29), mit dem sie ausgerüstet ist, sich mindestens in ihrem inneren Volumen in seiner Gesamtheit in einem Schacht (35) erstreckt.

7. Einbaudose nach Anspruch 5, dadurch gekennzeichnet, daß der Schacht (35) sich in ihrem inneren Volumen über das Verankerungsorgan (29) hinaus erstreckt.

8. Einbaudose nach einem der Ansprüche 6, 7, dadurch gekennzeichnet, daß sich der Schacht (35) in Höhe mit dem freien Rand ihrer Seitenwand (12) erstreckt.

9. Einbaudose nach einem der Ansprüche 5 bis 8, dadurch gekennzeichnet, daß der Schacht (35) an der äußeren Fläche ihres Bodens (11) hervorsteht.

10. Einbaudose nach einem der Ansprüche 5 bis 9, dadurch gekennzeichnet, daß der selbst aus isolierendem Kunststoff hergestellte Schacht (35) mit ihrem Boden (11) einstückig ist.

11. Einbaudose nach einem der Ansprüche 5 bis 10, dadurch gekennzeichnet, daß das Verankerungsorgan (29), mit dem sie ausgerüstet ist, in ihrem Schacht (35) nach der Art eines Einsatzes umgossen ist.

12. Einbaudose nach einem der Ansprüche 5 bis 11, dadurch gekennzeichnet, daß das Verankerungsorgan (29) in dem Schacht (35) bezüglich Drehung blockiert ist.

13. Einbaudose nach einem der Ansprüche 1 bis 12, dadurch gekennzeichnet, daß sie in einem Abstand von dem Verankerungsorgan (29), mit dem sie ausgerüstet ist, einen Schacht (38) zur Inbereitschaftsstellung eines Hakens (31) aufweist.

14. Einbaudose nach Anspruch 13, dadurch gekennzeichnet, daß dieser Schacht (38) sich mindestens zum Teil an der äußeren Fläche ihres Bodens (11) hervorspringend erstreckt.
